# EUROPEAN PATENT APPLICATION

(11) **EP 4 670 879 A1**
(43) Date of publication of application: **31.12.2025**
(21) Application number: 24185195.5
(22) Date of filing: 28.06.2024
(51) Int. Cl.: B23B 27/16

(54) **CUTTING INSERT FOR TURNING AND A TURNING TOOL THEREFOR**

(71) Applicant: AB Sandvik Coromant, 811 81 Sandviken (SE)
(72) Inventor: Wikblad, Krister, Sandviken (SE); Löf, Ronnie, Sandviken (SE); Wickström, David, Sandviken (SE)
(74) Representative: Sandvik

(57) **Abstract**

The invention relates to a cutting insert (1) for a turning tool, the cutting insert comprising a first surface (2) and a second surface (3), wherein the first and second surfaces are arranged opposite each other and facing opposite directions. The cutting insert further comprises a peripheral surface (4) connecting the first surface (2) and the second surface (3). A central axis (C) of the cutting insert extends from the first surface to the second surface. An edge formed by an intersection between the first surface and the peripheral surface, when seen in a plan view of the first surface, includes a plurality of circular segments (5), each having a radius of curvature (r), and a corresponding number of intermediary segments (6) interposed between the circular segments (5). Each circular segment (5) has a first length of extension (L1) and each intermediary segment (6) has a second length of extension (L2), wherein the first length of extension (L1) is greater than the second length extension (L2). The radius of curvature (r) of the circular segments is smaller than a maximum radial distance (Rmax) from the central axis (C) to the edge.

## Description

### TECHNICAL FIELD

The invention relates to metal cutting, and in particular to turning operations wherein a turning tool is used for machining a rotating workpiece.

### BACKGROUND ART

Within the field of metal cutting, a turning tool may be used for machining the surface of a rotating workpiece.

A cutting insert, for example made of cemented carbide or some other wear resistant material, is commonly arranged at the front of a turning tool. Cutting inserts often include multiple cutting edges, such that the cutting insert is indexable, i.e., such that different cutting edges can be positioned in active or inactive positions depending on how the cutting insert is mounted in the insert seat. Some cutting inserts do not have well-defined indexing positions, such as round cutting inserts having a uniform circular cutting edge in a top view of the cutting insert. Such round cutting inserts have very strong cutting edges and can be used at high feed rates. A problem with round cutting inserts is that they may be difficult to secure in the insert seat of a turning tool since the friction force between the peripheral surface of the insert and the corresponding support surfaces in the insert seat may not be sufficient to prevent rotation of the cutting insert within the insert seat. One way to prevent rotation of the cutting insert is to provide indentations in the bottom surface of the cutting insert that interacts with corresponding projections on the bottom surface of the insert seat. However, such arrangement may reduce the strength of the cutting insert and cause premature breakage of the cutting insert.

CN107803523 discloses a round cutting insert wherein some segments of the circular arc of the cutting insert have been replaced by straight segments, such that the cutting edge is alternately composed of straight segments and circular arc segments that represent different parts of the whole circle. Thereby, by utilizing the flat portions of the peripheral surface of the cutting insert formed due to the straight segments, the positioning reliability of the cutting insert within the insert seat is improved. Moreover, the cutting edges formed by the straight segments may also be employed for cutting and hence the cutting insert may provide different cutting possibilities compared to a traditional round cutting insert.

However, the presence of the straight segments will reduce the robustness of the cutting insert when compared to a conventional round cutting insert.

Hence, there is a need for improved round cutting inserts that are both robust and easy to securely mount in an insert seat.

### SUMMARY

It is an object of the present invention to mitigate the shortcomings of the prior art and to provide a cutting insert that has a similar basic functionality as a conventional round cutting insert for turning and that is equally robust but also easy to securely mount in an insert seat of the turning tool. Another object is to provide a versatile cutting insert with good performance for various cutting depths.

Thus, according to a first aspect, the invention relates to cutting insert for a turning tool, the cutting insert comprising:
- a first surface and a second surface, wherein the first and second surfaces are arranged opposite each other and facing opposite directions; and
- a peripheral surface connecting the first surface and the second surface.

A central axis of the cutting insert extends from the first surface to the second surface. An edge formed by an intersection between the first surface and the peripheral surface, when seen in a plan view of the first surface, includes a plurality of circular segments, each having a radius of curvature, and a corresponding number of intermediary segments interposed between the circular segments. Each circular segment has a first length of extension and each intermediary segment has a second length of extension, wherein the first length of extension is greater than the second length extension. The radius of curvature of the circular segments is smaller than a maximum radial distance from the central axis to the edge.

The inventors have found that the radius of curvature of the circular segments of the cutting insert does not necessarily have to correspond to the radius of a conventional round cutting insert of the same dimension. In particular, the inventors have found that it may be beneficial if the radius of curvature of each circular segment is smaller than the maximum radial distance to the edge from a center axis of the cutting insert.

A consequence of such design is that a transition between a circular segment and an adjacent intermediary segment may be less sharp. In other words, each transition between a circular segment and an intermediary segment will not involve any significant kinks or sharp corners and may instead be completely smooth.

Due to the smooth transitions between the intermediary segments and the circular segments, the robustness of the cutting insert is increased. Moreover, such geometry provides smooth cutting and improves the chip formation in turning operations where not only a circular segment of the edge is engaged in cutting but also the adjacent intermediary segment. In contrast, a sharp corner at the transition from the circular segment to the intermediary segment would result in less favorable cutting conditions and high cutting forces at said transition.

The first surface of the cutting insert includes a rake face, and the peripheral surface includes a clearance face, wherein a cutting edge is formed at the intersection therebetween.

The whole edge formed by the intersection between the first surface and the peripheral surface may correspond to the cutting edge. In other words, all parts of the edge may be configured to act as a cutting edge. Hence, the rake face and the clearance face may extend on the first surface and the peripheral surface, respectively, all along the edge. Which parts of the edge that will correspond to an active cutting edge, i.e., the cutting edge that is currently arranged for cutting, depends on how the cutting insert is mounted in the insert seat of the turning tool and on what kind of cutting operation that is performed. The active cutting edge normally includes at least a part of one of the circular segments. The active cutting edge may also include at least a part of one of the intermediary segments. For some embodiments of the cutting insert, in particular embodiments wherein the edge comprises a large number of circular segments, the active cutting edge may include parts of multiple circular segments and/or intermediary segments.

In contrast to a cutting insert having a completely circular edge, a cutting insert according to the present disclosure will be easily indexable between a predefined number of positions corresponding to the number of circular segments. For example, a cutting insert having four circular segments and four intermediary segments can be mounted in four different positions within the insert seat. This will facilitate the indexing procedure.

The cutting insert may be single sided or double sided. In the latter case, a cutting edge will be formed also at the intersection between a rake face on the second surface and a clearance face on the peripheral surface. Such cutting edge may correspond completely to the cutting edge formed at the intersection between the rake face on the first surface and the clearance face on the peripheral surface. In effect, such double sided cutting insert may be indexed twice as many times as a single sided cutting insert with a corresponding number of circular segments.

The cutting insert may include a central hole, extending centrally through the cutting insert along the central axis of the cutting insert. In other words, the central axis of the cutting insert may extend centrally along the extension of such hole. The hole may be used when mounting the cutting insert within an insert seat of a turning tool by using a fasting element, such as a screw.

The cutting insert may be made from a wear resistant material, such as cemented carbide. The cutting insert may be non-coated or coated with thin layer of a different material.

Each of the circular segments has a length of extension that is greater than the length of extension of each of the intermediary segments, and, consequently, the combined length of extension of all circular segments is greater than the combined length of extension of all intermediary segments. According to some embodiments, all the circular segments have corresponding lengths of extension. Correspondingly, all the intermediary segments may also have corresponding lengths of extension. Thereby, the cutting insert will be symmetrical and not elongated in any particular direction and may resemble the shape of a conventional round cutting insert (and be used in a similar way).

The edge formed by the intersection between the first surface and the peripheral surface may be located in a plane that is perpendicular to the central axis of the cutting insert (i.e., a plane that is parallel to a plane in which the first surface generally extends). In other words, when seen in a side view of the cutting insert, i.e., a view towards the peripheral surface of the cutting insert along a direction perpendicular to the central axis, the edge may be straight and extend perpendicularly to the central axis. However, for some embodiments it is also envisaged that the edge, in such side view, may be curvilinear and/or extend in a different direction with respect to the central axis. As used herein, any references to the characteristics and extension of the circular segments or intermediary segments are made with respect to a plan view of the first surface of the cutting insert, i.e., segments as seen from a direction along the central axis towards the first surface, and not dependent on the extension of the edge in a side view.

The peripheral surface of the cutting insert preferably includes different surface portions corresponding to the circular segments and the intermediary segments of the edge. Hence, as an example, a profile of a surface portion of the peripheral surface bordering a circular segment of the edge may have the same curvature as the circular segment. For a negative cutting insert, such surface portion would thus correspond to a portion of a circular cylindrical surface. A surface portion of the peripheral surface that borders an intermediary segment of the edge may also have the same profile as the intermediary edge. For example, such surface portion may be flat.

The intermediary segments may be rectilinear, or substantially rectilinear. It is also envisaged, though, that the intermediary segments are curved but have a much greater radius of curvature than the circular segments. Such radius of curvature of the intermediary segments may for example be at least twice the radius of curvature of the circular segments and may for example be so great that the intermediary segments may be considered as substantially straight or rectilinear. If the intermediary segments are rectilinear, and if the surface portions of the peripheral surface that borders the intermediary segments of the edge has the same profile as the intermediary segments, such surface portions would be flat.

According to some embodiments, each of the intermediary segments extends, in relation to a circular segment connected therewith, along a tangent to the circular segment at the point where the circular segment transitions into the intermediary segment.

Thereby, the transition from the circular segment to the intermediate segment is completely smooth.

According to some embodiments, the circular segments, each having a radius r, may be configured such that they, if combined, would form a full circle with the radius r. This is in contrast to a cutting insert having a cutting edge comprising straight segments interposed between circular segments that each has a radius of curvature that corresponds to the maximum radial distance from the central axis of the cutting insert to the edge. The circular segments of such cutting insert, if combined, would not form a full circle.

According to some embodiments, the plurality of circular segments includes at least four circular segments. Such cutting insert may be particularly suited for being securely mounted in an insert seat of a turning tool, and mountable in at least four different positions. It is also envisaged that the cutting insert includes fewer circular segments, such as three circular segments. This will result in that each circular segment has quite long extension, which may be beneficial for some applications. According to some embodiments, the number of circular segments is three, four, five or six.

The first length of extension may be at least two times greater than the second length of extension. Thereby, the overall geometry of the cutting insert will closely resemble a conventional round cutting insert, and the cutting insert will be readily useable in a similar way as a conventional round cutting insert.

For example, the first length of extension may be at least three times greater than the second length of extension. However, a very large difference between the first length of extension and the second length of extension may result in a too small length of the intermediary segments, and thus not provide a sufficient deviation from a completely round geometry and consequently not providing the required effect of preventing dislocation of the cutting insert within an insert seat of a turning tool. Hence, the second length of extension should not be too small. The required minimum second length of extension may depend on the intended application and the forces the cutting insert will experience during machining. According to some embodiments, the second length of extension is at least 0.5 mm, such as, for example, 1 mm or more. According to some embodiments, the first length of extension is less than twenty times greater than the second length of extension. As an example, the first length of extension may be between three and fifteen times greater than the second length of extension.

According to another aspect of the invention, a turning tool is provided, the turning tool comprising a cutting insert according to any of the embodiments described herein, and wherein the turning tool comprises a tool body including an insert seat in which the cutting insert is mountable. The insert seat comprises a bottom support surface for supporting the second surface of the cutting insert, and a peripheral support surface for supporting parts of the peripheral surface of the cutting insert, wherein the peripheral support surface has a complementary geometry to said parts of the peripheral surface.

With an insert seat having a peripheral support surface that matches the not completely round profile of parts of the peripheral surface of the cutting insert, the cutting insert will be securely held in the insert seat and prevented from being rotated within the insert seat, even without using ribs and corresponding depressions in the bottom surface of the insert seat and the second surface of the cutting insert. Thereby, the first surface can have a similar geometry as the second surface, and the cutting insert may therefore be double-sided.

### BRIEF DESCRIPTION OF DRAWINGS

The solution will now be described in more detail by means of exemplary embodiments and with reference to the accompanying drawings, in which:
Fig. 1 is a perspective view of a cutting insert according to a first embodiment.
Fig. 2 is a plan view of the first surface of the cutting insert in Fig. 1.
Fig. 3 is a side view of the cutting insert as seen from the direction III indicated in Fig. 2.
Fig. 4 is a side view of the cutting insert as seen from the direction IV indicated in Fig. 2.
Fig. 5 shows a tool body of a turning tool for use with a cutting insert according to Figs. 1-4.
Fig. 6 illustrates a turning tool engaged in a longitudinal turning operation, the turning tool comprising a cutting insert according to Figs. 1-4.

All the figures are schematic, not necessarily to scale, and generally only show parts which are necessary in order to elucidate the respective embodiments, whereas other parts may be omitted or merely suggested. Unless otherwise indicated, like reference numerals refer to like parts in different figures.

### DETAILED DESCRIPTION OF EMBODIMENTS

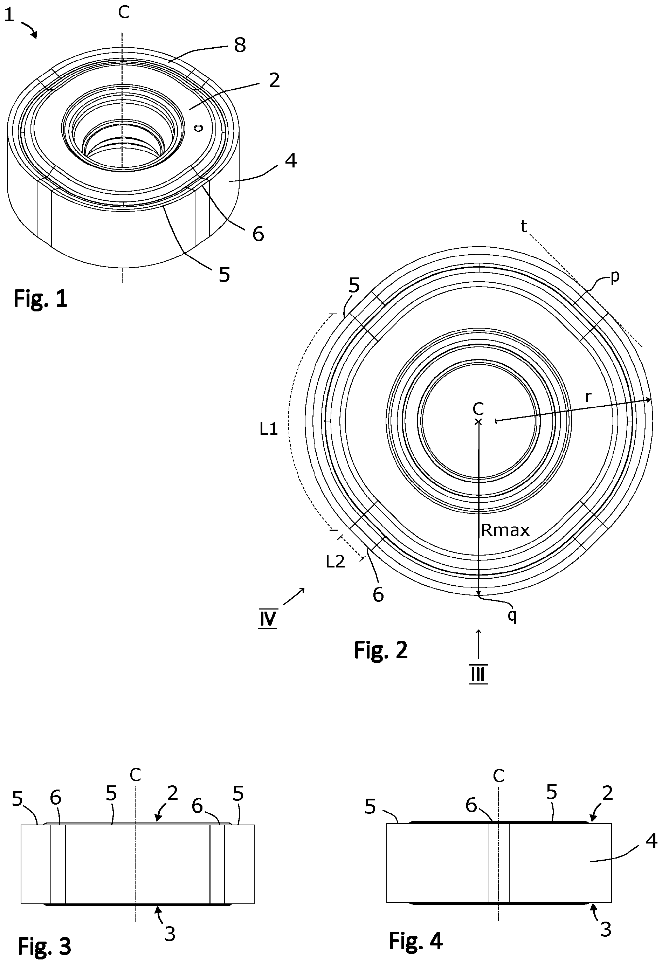

Figs. 1-4 illustrates a cutting insert 1 comprising a first surface 2 and a second surface 3, wherein the first and second surfaces 2,3 are arranged opposite each other and facing opposite directions. A peripheral surface 4 connects the first surface 2 and the second surface 3. A central axis C of the cutting insert 1 extends from the first surface 2 to the second surface 3. An edge is formed by an intersection between the first surface 2 and the peripheral surface 4. When seen in a plan view of the first surface 2, as shown in Fig. 2, the edge includes a plurality of circular segments 5, each having a radius of curvature r. The edge further includes a corresponding number of intermediary segments 6 interposed between the circular segments 5. In the illustrated embodiment, the edge includes four circular segments 5 and four intermediary segments 6. As illustrated in Fig. 2, each circular segment 5 has a first length of extension L1, and each intermediary segment 6 has a second length of extension L2. The first length of extension L1 is greater than the second length of extension L2. In the illustrated embodiment, the first length of extension L1 is about eight times greater than the second length of extension L2. According to other embodiments the difference between the first and second lengths of extension could be greater or smaller. If the first length of extension L1 is at least two times greater than the second length of extension L2, the cutting insert will have a somewhat round-like appearance and may be used in a similar way as a conventional round cutting insert.

The edge is located at a radial distance from the central axis C that varies along the extension of the edge. The edge is located at a maximum radial distance Rmax from the central axis C at points q located halfway along each circular segment 5. The radius of curvature r of each circular segment 5 is smaller than the maximum radial distance Rmax from the central axis C to the edge.

The first surface 2 includes a rake face 8 extending along the full length of the edge, i.e., along all the circular segments 5 and the intermediary segments 6. Accordingly, the whole edge may be considered as a cutting edge and may be used for cutting a workpiece, depending on the orientation of the cutting insert with respect to the workpiece.

Each of the intermediary segments 6 are rectilinear. As seen in fig. 2, each intermediary segment 6 extends, in relation to a circular segment 5 connected therewith, along a tangent t to the circular segment 5 at a point p where the circular segment transitions into the intermediary segment. Thereby, the transition between the circular segment and the intermediary segment is completely smooth.

With such design, a combination of all circular segments 5 (i.e., in the absence of the intermediary segments 6) would result in a full circle with the radius r.

As seen in Figs. 3-4, the edge formed by the circular segments 5 and the intermediate segments 6, when seen in a side view, extends in a direction perpendicular to the central axis C.

According to the illustrated embodiment, the peripheral surface 4 extends between the first and second surfaces 1,2 in a direction that is parallel with the central axis C, meaning that the cutting insert 1 has a negative basic shape. The second surface therefore has a similar geometry as the first surface, and cutting edges are formed also at the intersection between the second surface and the peripheral surface. Accordingly, the cutting insert 1 can be used in eight different positions (four positions for each of the first and the second surfaces) within an insert seat of a turning tool.

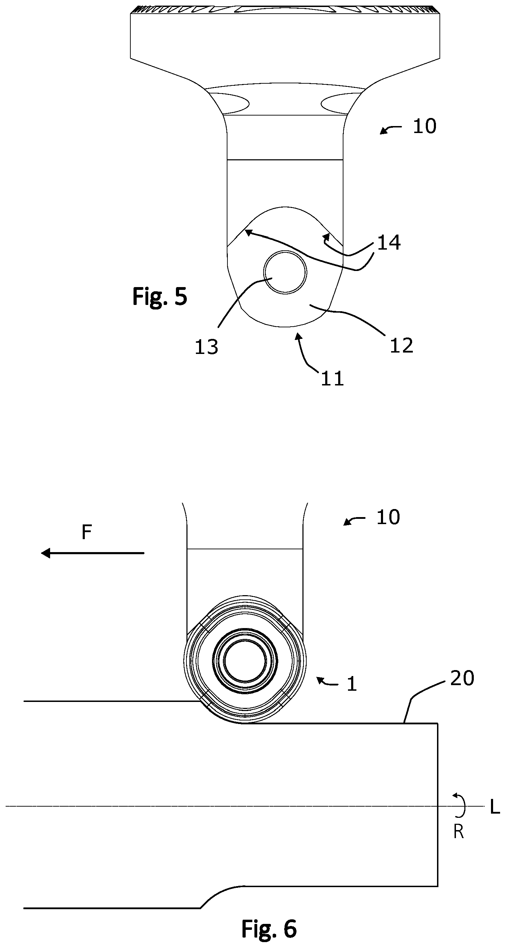

Fig. 5 illustrates a tool body 10 for a turning tool. The tool body 10 comprises an insert seat 11 comprising a bottom surface 12 with a threaded hole 13 for receiving a screw used for mounting the cutting insert 1 in the insert seat. The insert seat 11 further comprises a peripheral support surface 14 arranged to abut and support portions of the peripheral surface 4 of the cutting insert 1.

Fig. 6 illustrates parts of a turning tool that comprises the tool body 10 and the cutting insert 1 mounted in the insert seat 11 for machining a workpiece 20. The workpiece 20 is rotating around its longitudinal axis L in a rotation direction R while the turning tool is moved in a feed direction F.

In the illustrated embodiment, the cutting depth is rather large, such that not only one of the active circular segments 5 is engaged in cutting but also a part of the intermediate segment 6 connected to the circular segment 5. Since the transition between the circular segment 5 and the intermediate segment 6 does not involve any sharp corners, the transition is sufficiently strong for withstanding the high cutting forces caused by the large cutting depth and the transition is not particularly susceptible to wear. Moreover, the chip formation will be beneficial. With this geometry, it would be possible to use an even greater cutting depth than what is shown in Fig. 6, wherein a part of the next circular segment following the intermediary segment is also engaged in cutting.

The peripheral support surface of the insert seat will mitigate the risk for dislocation, in particular rotation, of the cutting insert 1 within the insert seat. By having a peripheral support surface 14 in the insert seat 11 with a geometry that is complementary to (matches) the non-circular profile of the peripheral surface 4 of the cutting insert 1, the cutting insert 1 is efficiently prevented from rotating within the insert seat. In the illustrated embodiment, the peripheral support surface 14 is formed by flat surface portions supporting parts of the peripheral surface 4 bordering intermediary segments 6 on the cutting insert 1. In other words, the peripheral support surface 14 is formed by two flat portions supporting corresponding flat portions on the peripheral surface 4 of the cutting insert 1.

A turning tool as illustrated in Fig. 6 could be used for turning also in the opposite feed direction, in which case the other half of the circular segment 5 and the intermediate segment 6 connected thereto at the other side would be the active cutting edge.

## Claims

1. A cutting insert (1) for a turning tool, the cutting insert comprising:
- a first surface (2) and a second surface (3), wherein the first and second surfaces are arranged opposite each other and facing opposite directions;
- a peripheral surface (4) connecting the first surface (2) and the second surface (3),
wherein a central axis (C) of the cutting insert extends from the first surface to the second surface, and wherein an edge formed by an intersection between the first surface and the peripheral surface, when seen in a plan view of the first surface, includes a plurality of circular segments (5), each having a radius of curvature (r), and a corresponding number of intermediary segments (6) interposed between the circular segments (5), wherein each circular segment (5) has a first length of extension (L1) and each intermediary segment (6) has a second length of extension (L2), wherein the first length of extension (L1) is greater than the second length extension (L2), **characterized in that** the radius of curvature (r) is smaller than a maximum radial distance (Rmax) from the central axis (C) to the edge.

2. A cutting insert according to claim 1, wherein each intermediary segment is rectilinear, or substantially rectilinear.

3. A cutting insert according to claim 2, wherein each intermediary segment extends, in relation to a circular segment connected therewith, along a tangent (t) to the circular segment at a point (p) where the circular segment transitions into the intermediary segment.

4. A cutting insert according to any of the previous claims, wherein the circular segments, each having the radius of curvature (r), are configured such that they, if combined, would form a full circle with a corresponding radius (r).

5. A cutting insert according to any of the previous claims, wherein the plurality of circular segments includes at least four circular segments.

6. A cutting insert according to any of the previous claims, wherein the first length of extension (L1) is at least two times greater than the second length of extension (L2).

7. A turning tool comprising a cutting insert (1) according to any of the previous claims, wherein the turning tool comprises a tool body (10) including an insert seat (11) in which the cutting insert (1) is mountable, wherein the insert seat (11) comprises:
- a bottom support surface (12) for supporting the second surface (3) of the cutting insert;
- a peripheral support surface (14) for supporting parts of the peripheral surface (4) of the cutting insert (1), wherein the peripheral support surface (14) has a complementary geometry to said parts of the peripheral surface (4).
